# EUROPÄISCHE PATENTSCHRIFT

(11) **EP 2 599 684 B1**
(45) Veröffentlichungstag und Bekanntmachung des Hinweises auf die Patenterteilung: **08.10.2014**
(21) Anmeldenummer: 12007893.6
(22) Anmeldetag: 23.11.2012
(51) Int. Cl.: B62D 1/183, B62D 1/19, B62D 1/181, B62D 1/184

(54) **Lenksäule für ein Kraftfahrzeug, insbesondere für einen Personenkraftwagen**
Steering column for a motor vehicle, in particular for a passenger vehicle
Colonne de direction pour un véhicule automobile, en particulier pour un véhicule de transport de passagers

(30) Priorität: 03.12.2011 DE 102011120304
(43) Veröffentlichungstag der Anmeldung: 05.06.2013
(73) Patentinhaber: AUDI AG, 85045 Ingolstadt (DE)
(72) Erfinder: Kräuter, Thomas, 85080 Gaimersheim (DE)

(56) Entgegenhaltungen:
- DE-A1- 10 337 585
- DE-A1-102010 013 522
- DE-B4- 10 161 849
- JP-A- 2004 161 242

## Beschreibung

Die Erfindung betrifft eine Lenksäule für ein Kraftfahrzeug, insbesondere für einen Personenkraftwagen, nach dem Oberbegriff des Anspruchs 1.

Lenkräder mit einer Längseinstellung zur Anpassung an die Größe eines Fahrers sind in unterschiedlichen Ausführungsformen allgemein bekannt. Zudem ist beispielsweise auch ein längs- und höhenverstellbares Lenkrad mit entsprechend verstellbarer Längssäule bekannt (DE 101 61 849 B4).

Bei einer gattungsgemäßen Lenksäule mit einer individuell in der Länge und Höhe einstellbaren Lenkrad-/Lenksäulenverstellung (DE 103 37 585 A1) kann die jeweils eingestellte und arretierte Lage des Lenkrads größere Fahrer beim Ein- und Aussteigen behindern. Für ein bequemeres Ein- und Aussteigen kann zwar die Lenkrad-/Längssäulenverstellung betätigt und gelöst werden und das Lenkrad zumindest teilweise aus dem Ein- und Ausstiegbereich verlagert werden. Nachteilig muss dann vor einer neuen Fahrt vom Fahrer jedoch für das Lenkrad wieder eine neue optimale Position gefunden und das Lenkrad neu positioniert und arretiert werden. Das vorstehende Problem tritt insbesondere bei Fahrzeugen ohne Sitzverstellung auf, da hier zur Erreichung einer optimalen Sitzposition sowohl die Pedalerie als auch die Lenkradlage einstellbar ausgeführt sein müssen und eine fahrergrößenspezifische Anpassung der Sitzposition bezüglich eines Lenkrads nicht durch eine Sitzverstellung möglich ist.

Die gattungsgemäße Längssäule weist für eine Längeneinstellung eine karosseriefest verbindbare Halterung mit einem teleskopierbaren Säulenabschnitt im Bereich der Halterung auf. Ein Teleskopabschnitt ist hier einerseits mit einem Lenkrad und andererseits mit einem Crashschlitten verbunden. Der Crashschlitten ist in einer Schlittenführung an der Halterung in Richtung des Säulenabschnitts um einen vorgegebenen Crashschlittenweg verschiebbar gehalten dergestalt, dass der Crashschlitten im Fahrbetrieb an einer hinteren auf einen Fahrer hingerichteten Ausgangslage positioniert ist und bei einem Crash über einer vorgegebenen Crashkrafteinwirkung in eine vordere Frontendlage weg vom Fahrer verlagerbar ist.

Dies wird konkret hier dadurch erreicht, dass der Crashschlitten als Schieber in der Schlittenlängsführung mit einer Bremsfunktion so schwergängig längsverschiebbar ist, dass er erst bei Überschreitung einer bestimmten Schubkraft, wie sie bei einem Fahrzeugcrash auftritt, in der Schlittenlängsführung verschoben wird. Eine Längsverschiebung des Lenkrads nach vorne um einen Crashschlittenweg von ca. 100mm erfolgt als Sicherheitsmaßnahme dann ausschließlich bei einem Fahrzeugcrash unabhängig von einer individuell einstellbaren und betätigbaren Lenkradlängseinstellung.

Aufgabe der Erfindung ist es, durch eine geeignete Anordnung der Lenksäule das Ein- und Aussteigen für einen Fahrer zu erleichtern.

Diese Aufgabe wird dadurch gelöst, dass der vorgesehene Crashschlittenweg als Einschub des Lenkrads, gegebenenfalls als zusätzlicher Einschub bei einer ohnehin vorhandenen individuell betätigbaren Lenksäulenlängsverstellung für den Fall des Ein- und Aussteigens genutzt wird. Dazu ist zwischen dem Crashschlitten und der Halterung eine betätigbare Verriegelungseinrichtung zur Verriegelung des Crashschlittens im Fahrbetrieb in seiner Ausgangslage angeordnet. Bei geöffneter Verriegelung ist dagegen der Crashschlitten als Einstiegshilfe vom Fahrer mit dem Lenkrad in die vordere Frontendlage verschiebbar. Zudem weist die Verriegelungseinrichtung ein Sollbruch-Element auf, das im Crashfall über einer vorgegebenen Crashkrafteinwirkung bricht oder so verformbar ist, dass die Verriegelung freigegeben wird und der Crashschlitten aus der Ausgangslage in die Frontendlage verlagerbar ist.

Durch die erfindungsgemäße Ausbildung wird somit erreicht, dass der Crashschlitten mit seinem Crashschlittenweg als betätigbare Einstiegshilfe für einen bequemen Ein- und Ausstieg des Fahrers genutzt wird und andererseits durch die Verriegelungseinrichtung mit seinem Sollbruchelement seine bisherige Sicherheitsfunktion beibehält. Insbesondere kann auch hier das Sollbruchelement durch geeignete Dimensionierung der Bruchlast oder der Verformungsgeometrie Crashenergie in der Art eines Deformationselements aufnehmen und somit die auf einen Fahrer bei einem Aufprall auf das Lenkrad einwirkende Energie vorteilhaft verringern.

Ein weiterer Vorteil besteht darin, dass durch die Verwendung des Crashschlittens als Einstieghilfe die individuelle Lenkradeinstellung für den Fahrbetrieb durch den selben Fahrer nicht verändert wird, so dass nach dem Einsteigen des Fahrers bei einer Verlagerung des Crashschlittens in seine Ausgangslage sofort wieder die individuell eingestellte Position des Lenkrads eingenommen wird.

Bei einer einfachen Ausführungsform kann die Verriegelungseinrichtung als federvorgespannte Rasteinrichtung ausgebildet sein, die in der Ausgangslage mit wenigstens einem Sollbruch-Riegel selbsttätig einrastet. Die Rasteinrichtung ist dabei zweckmäßig am Crashschlitten angeordnet, wobei der wenigstens eine Sollbruch-Riegel in eine zugeordnete Ausnehmung an der Halterung einrastet. Der Sollbruchriegel kann dabei beispielsweise einfach als Bolzen mit einer Bowdenzugbetätigung ausgeführt sein.

Zum Schutz gegen eine unsachgemäße Betätigung der Verriegelungseinrichtung kann die Entriegelung für den Crashschlitten in seiner Ausgangslage im Fahrbetrieb gesperrt und im Stillstand, insbesondere bei abgeschalteter Brennkraftmaschine freigegeben werden. Zudem kann gegebenenfalls auch der Start der Brennkraftmaschine und/oder der Fahrbetrieb nur bei geschlossener Verriegelungseinrichtung in der Ausgangslage des Crashschlittens freigegeben werden.

Die Betätigung der Verriegelungseinrichtung kann je nach den Gegebenheiten mechanisch von Hand oder über ein Steuerelement, insbesondere mittels eines Tasters erfolgen.

Ebenso kann je nach den Gegebenheiten und dem Aufrüstungsgrad eines Fahrzeugs die Verschiebung des Crashschlittens in seine vordere Einstieghilfeposition und/oder zurück in seine Ausgangslage mit dem Steuerrad von Hand oder gesteuert mittels eines elektrischen und/oder pneumatischen und/oder hydraulischen Aktuators erfolgen. Insbesondere bei einer Automatisierung kann dann die Betätigung der Verriegelungseinrichtung und die Verschiebung des Crashschlittens gekoppelt werden. Zusätzlich zur erfindungsgemäßen Einstieghilfe mittels eines Crashschlittens kann die Lenksäule eine übliche Einrichtung für eine fahrerindividuelle Längen- und/oder Höheneinstellung aufweisen, welche durch die Crashschlittenverschiebung nicht betroffen ist.

Anhand einer Zeichnung wird ein Ausführungsbeispiel der Erfindung erläutert.

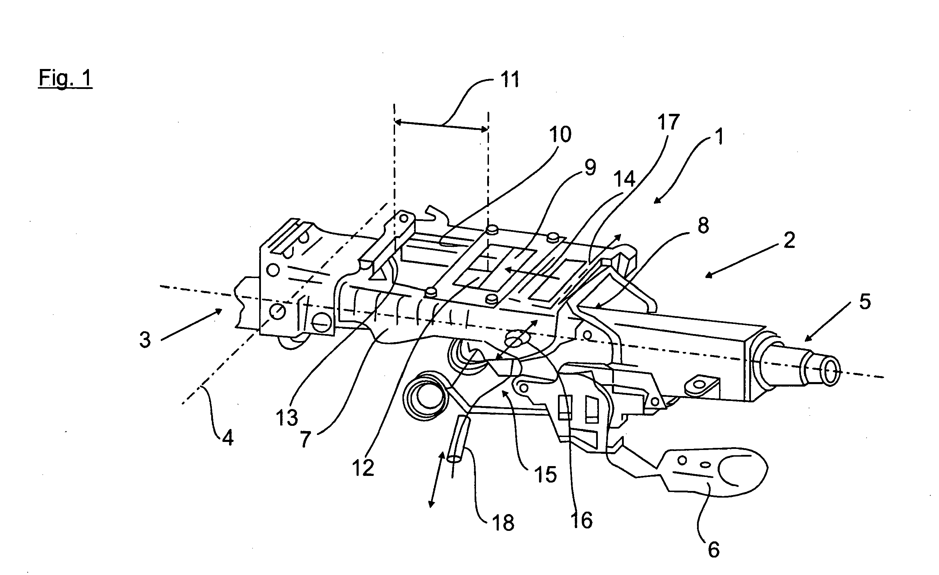

Die einzige Figur zeigt eine perspektivische Ansicht einer Lenksäule in der Blickrichtung von (rechts) hinten nach (links) seitlich schräg nach vorne.

Die in ihrer Gesamtheit mit 1 bezeichnete Lenksäule weist einen hinteren Säulenabschnitt 2 auf, der mit einem (nicht im Detail dargestellten) vorderen Säulenabschnitt 3 über ein Kardangelenk verbunden ist.

Der hintere Säulenabschnitt 2 ist für eine individuelle Längseinstellung teleskopierbar und um eine Querachse 4 für eine Höheneinstellung schwenkbar ausgeführt. Am Ende 5 des hinteren Säulenabschnitts 2 ist im fertig montierten Zustand ein (nicht dargestelltes) Lenkrad angeordnet. Die individuelle Längs- und Höheneinstellung des Lenkrads wird mit einem Handhebel 6 lösbar und nach einer an die Größe eines Fahrers individuell angepassten Einstellung mit dem Handhebel 6 wieder arretierbar.

Der hintere Säulenabschnitt 2 ist in einer karosseriefest verbindbaren Halterung 7 angeordnet, wobei ein Teleskopabschnitt 8 mittelbar oder unmittelbar mit dem (nicht dargestellten) Lenkrad verbunden ist und andererseits eine Verbindung zu einem Crashschlitten 9 besteht.

Der Crashschlitten 9 ist in der Halterung 7 in einer Schlittenführung 10 in Längsrichtung um einen vorgegebenen Crashschlittenweg 11 verschiebbar gehalten. Im Fahrbetrieb ist der Crashschlitten 9 an einer hinteren einen Fahrer zugewandten Ausgangslage 12 positioniert und wird bei einem Crash über einer vorgegebenen Crashkrafteinwirkung in eine vordere Frontendlage 13 verlagert (Pfeil 14).

In der Ausgangslage 12 ist der Crashschlitten 9 mittels einer betätigbaren Verriegelungseinrichtung 15 gehalten und arretiert. Die Verriegelungseinrichtung 15 ist hier beispielhaft und schematisch als Rasteinrichtung am Crashschlitten 9 dargestellt, bei der beidseitig jeweils ein federvorgespannter Bolzen als Sollbruchriegel 16, 17 verrastbar in eine zugeordnete Ausnehmung an der Halterung 7 eingreift und bis einer Bruchlast über der vorgegebenen Crashkrafteinwirkung zur Freigabe der Arretierung bricht. Die Verriegelungseinrichtung 15 kann hier mittels eines schematisch dargestellten Bowdenzug 18 durch Einfahren der Sollbruchriegel 16, 17 gelöst werden. Damit kann der Crashschlitten 9 in einer Einstieghilfefunktion durch Schieben am Lenkrad in seine Frontendlage 13 eingeschoben werden, wodurch der Ausstieg- und Einstiegbereich für einen Fahrer vergrößert wird. Nach dem Einsteigen des Fahrers kann dieser mit dem Lenkrad den hinteren Säulenabschnitt 2 mit dem Crashschlitten 9 wieder in seine selbsttätig verrastete und arretierte Ausgangslage 12 ziehen, wodurch die ursprünglich eingestellte optimale Position des Lenkrads wieder hergestellt ist.

## Patentansprüche

1. Lenksäule (1) für ein Kraftfahrzeug, insbesondere für einen Personenkraftwagen mit einer karosseriefest verbindbaren Halterung (7) und einem teleskopierbaren Säulenabschnitt (2) im Bereich der Halterung (7), wobei ein Teleskopabschnitt (8) sowohl mit einem Lenkrad als auch mit einem Crashschlitten (9) verbunden ist und der Crashschlitten (9) in einer Schlittenführung (10) an der Halterung (7) in Richtung des Säulenabschnitts (3) mit einem vorgegebenen Crashschlittenweg (11) verschiebbar gehalten ist, dergestalt, dass der Crashschlitten (9) im Fahrbetrieb an einer hinteren auf einen Fahrer hin gerichteten Ausgangslage (12) positioniert ist und bei einem Crash über einer vorgegebenen Crashkrafteinwirkung in eine vordere Frontendlage (13) weg vom Fahrer verlagerbar ist, **dadurch gekennzeichnet,**
**dass** zwischen dem Crashschlitten (9) und der Halterung (7) eine betätigbare Verriegelungseinrichtung (15) zur Verriegelung des Crashschlittens (9) im Fahrbetrieb in seiner Ausgangslage (12) angeordnet ist und bei geöffneter Verriegelung der Crashschlitten (9) als Einstiegshilfe vom Fahrer mit dem Lenkrad in die vordere Frontendlage (13) verschiebbar ist, und
**dass** die Verriegelungseinrichtung (15) wenigstens ein Sollbruch-Element aufweist, das im Crashfall über der vorgegebenen Crashkrafteinwirkung bricht oder so verformbar ist, dass die Verriegelung freigegeben wird und der Crashschlitten (9) aus der Ausgangslage (12) in die Frontendlage (13) verlagerbar ist.

2. Lenksäule (1) nach Anspruch 1, **dadurch gekennzeichnet, dass** die Verriegelungseinrichtung (15) eine federvorgespannte Rasteinrichtung ist, die in der Ausgangslage (12) mit wenigstens einem Sollbruch-Riegel (16, 17) selbsttätig einrastet.

3. Lenksäule (1) nach Anspruch 2, **dadurch gekennzeichnet, dass** die Rasteinrichtung am Crashschlitten (9) angeordnet ist und der wenigstens eine Sollbruch-Riegel (16, 17) in eine zugeordnete Ausnehmung an der Halterung (7) einrastet.

4. Lenksäule (1) nach einem der Ansprüche 1 bis 3, **dadurch gekennzeichnet, dass** für den Crashschlitten (9) in seiner Ausgangslage (12) die Entriegelung der Verriegelungseinrichtung (15) mittels eines Sperrelements im Fahrbetrieb gesperrt und im Stillstand, insbesondere bei abgeschalteter Brennkraftmaschine freigegeben ist.

5. Lenksäule (1) nach einem der Ansprüche 1 bis 4, **dadurch gekennzeichnet, dass** der Start der Brennkraftmaschine und/oder der Fahrbetrieb nur bei geschlossener Verriegelungseinrichtung (15) in der Ausgangslage (12) des Crashschlittens (9) freigegeben wird.

6. Lenksäule (1) nach einem der Ansprüche 1 bis 5, **dadurch gekennzeichnet, dass** die Betätigung der Verriegelungseinrichtung (15) mechanisch von Hand oder über ein Steuerelement insbesondere mittels eines Tasters erfolgt.

7. Lenksäule (1) nach einem der Ansprüche 1 bis 6, **dadurch gekennzeichnet, dass** die Verschiebung des Crashschlittens (9) in seine vordere Einstieghilfeposition mit dem Steuerrad von Hand oder gesteuert mittels eines elektrischen und/oder pneumatischen und/oder hydraulischen Aktuators erfolgt.

8. Lenksäule (1) nach einem der Ansprüche 1 bis 7, **dadurch gekennzeichnet, dass** die Betätigung der Verriegelungseinrichtung (15) und die Verschiebung des Crashschlittens (9) gekoppelt sind.

9. Lenksäule (1) nach einem der Ansprüche 1 bis 8, **dadurch gekennzeichnet, dass** die Lenksäule (1) zusätzlich zur Crashschlittenverlagerung eine Einrichtung für eine fahrerindividuelle Längen- und/oder Höheneinstellung aufweist.

## Claims

1. Steering column (1) for a motor vehicle, particularly for a passenger car, having a mounting (7) that can be connected to the vehicle body, and a telescopic column portion (2) in the region of the mounting (7), wherein a telescopic portion (8) is connected to both a steering wheel and a crash carriage (9), and the crash carriage (9) is held in a carriage guide (10) on the mounting (7) so as to be movable in the direction of the column portion (3) by a predefined travel distance (11), such that, while the vehicle is being driven, the crash carriage (9) is positioned at a rear starting position (12) directed towards a driver and, in the event of a crash, is movable away from the driver into a front end position (13) by a predefined crash force effect, **characterised in that**
between the crash carriage (9) and the mounting (7) is provided an actuatable locking device (15) for locking the crash carriage (9) in its starting position (12) while the vehicle is being driven and, when the lock is released, as an aid to entering the vehicle, the crash carriage (9) can be moved into the front end position (13) by the driver using the steering wheel, and **in that**
the locking device (15) comprises at least one frangible element which, in the event of a crash exceeding the predefined crash force effect, breaks or is deformable so as to release the lock and allow the crash carriage (9) to be moved from the starting position (12) into the front end position (13).

2. Steering column (1) according to claim 1, **characterised in that** the locking device (15) is a spring-biased latching device which automatically latches in the starting position (12) with at least one frangible pin (16, 17).

3. Steering column (1) according to claim 2, **characterised in that** the latching device is arranged on the crash carriage (9) and the at least one frangible pin (16, 17) latches into an associated recess on the mounting (7).

4. Steering column (1) according to one of claims 1 to 3, **characterised in that**, for the crash carriage (9) in its starting position (12), the release of the locking device (15) is prevented by a blocking element while the vehicle is being driven and is enabled when stationary, particularly when the engine is switched off.

5. Steering column (1) according to one of claims 1 to 4, **characterised in that** the starting of the engine and/or driving is only enabled when the locking device (15) is locked in the starting position (12) of the crash carriage (9).

6. Steering column (1) according to one of claims 1 to 5, **characterised in that** the actuation of the locking device (15) is carried out mechanically by hand or using a control element, particularly by means of a push-button.

7. Steering column (1) according to one of claims 1 to 6, **characterised in that** the movement of the crash carriage (9) into its front position, facilitating entry into the vehicle, is carried out manually using the steering wheel or under the control of an electrical and/or pneumatic and/or hydraulic actuator.

8. Steering column (1) according to one of claims 1 to 7, **characterised in that** the actuation of the locking device (15) and the movement of the crash carriage (9) are coupled together.

9. Steering column (1) according to one of claims 1 to 8, **characterised in that** the steering column (1) comprises, in addition to the movement of the crash carriage, a device for adjusting the length and/or height to suit the individual driver.

## Revendications

1. Colonne de direction (1) pour un véhicule automobile, en particulier pour un véhicule de tourisme, avec un support (7) pouvant être fixé de façon fixe par rapport à la carrosserie et un segment de colonne (2) télescopique dans la zone du support (7), un segment télescopique (8) étant raccordé aussi bien à un volant de direction qu'à un chariot de collision (9), et le chariot de collision (9) étant retenu de façon à pouvoir coulisser dans un guidage de chariot (10) sur le support (7) en direction du segment de colonne (3) avec une course de chariot de collision (11) prédéfinie, de telle façon que le chariot de collision (9), pendant le roulage, est positionné au niveau d'une position initiale (12) arrière dirigée vers un conducteur et peut, lors d'une collision dépassant une force de collision exercée prédéfinie, s'éloigner du conducteur vers une position d'extrémité frontale (13) avant, **caractérisée en ce que**,
entre le chariot de collision (9) et le support (7), il est disposé un dispositif de verrouillage (15) pouvant être actionné pour le verrouillage du chariot de collision (9) dans sa position initiale (12) pendant le roulage et, quand le verrouillage est ouvert, le chariot de collision (9) peut être déplacé avec le volant de direction dans la position d'extrémité frontale (13) avant en tant qu'aide à la montée du conducteur, et
**en ce que** le dispositif de verrouillage (15) présente au moins un élément de rupture programmée qui, en cas de collision dépassant la force de collision exercée prédéfinie, se rompt ou est déformable de telle sorte que le verrouillage est libéré et le chariot de collision (9) peut être déplacé à partir de la position initiale (12) vers la position d'extrémité frontale (13).

2. Colonne de direction (1) selon la revendication 1, **caractérisée en ce que** le dispositif de verrouillage (15) est un dispositif d'encliquetage prétendu par ressort qui, dans la position initiale (12), s'enclenche automatiquement avec au moins un verrou de rupture programmée (16, 17).

3. Colonne de direction (1) selon la revendication 2, **caractérisée en ce que** le dispositif d'encliquetage est disposé sur le chariot de collision (9) et **en ce que** l'au moins un verrou de rupture programmée (16, 17) s'enclenche dans un creux affecté sur le support (7).

4. Colonne de direction (1) selon l'une quelconque des revendications 1 à 3, **caractérisée en ce que**, pour le chariot de collision (9) dans sa position initiale (12), le déverrouillage du dispositif de verrouillage (15) est bloqué pendant le roulage au moyen d'un élément de blocage et est libéré à l'arrêt, en particulier quand le moteur à combustion interne est arrêté.

5. Colonne de direction (1) selon l'une quelconque des revendications 1 à 4, **caractérisée en ce que** le démarrage du moteur à combustion interne et/ou le roulage n'est libéré que lorsque le dispositif de verrouillage (15) est fermé dans la position initiale (12) du chariot de collision (9).

6. Colonne de direction (1) selon l'une quelconque des revendications 1 à 5, **caractérisée en ce que** l'actionnement du dispositif de verrouillage (15) s'effectue mécaniquement à la main ou par le biais d'un élément de commande, en particulier au moyen d'une touche.

7. Colonne de direction (1) selon l'une quelconque des revendications 1 à 6, **caractérisée en ce que** le coulissement du chariot de collision (9) vers sa position avant d'aide à la montée avec le volant s'effectue à la main ou bien de façon commandée au moyen d'un actionneur électrique et/ou pneumatique et/ou hydraulique.

8. Colonne de direction (1) selon l'une quelconque des revendications 1 à 7, **caractérisée en ce que** l'actionnement du dispositif de verrouillage (15) et le coulissement du chariot de collision (9) sont couplés.

9. Colonne de direction (1) selon l'une quelconque des revendications 1 à 8, **caractérisée en ce que** la colonne de direction (1) présente, en plus du déplacement du chariot de collision, un dispositif pour un réglage en hauteur et/ou en longueur individualisé pour le conducteur.
